# EUROPEAN PATENT APPLICATION

(11) **EP 4 764 679 A1**
(43) Date of publication of application: **24.06.2026**
(21) Application number: 25211417.8
(22) Date of filing: 27.10.2025
(51) Int. Cl.: G02F 1/1333, G02F 1/1339

(54) **MONITOR ASSEMBLY**

(30) Priority: 23.12.2024 IT 202400029649
(71) Applicant: Omron Europe B.V., 2132 JD Hoofddorp (NL)
(72) Inventor: MANCEAU, Matthieu, 2132JD Hoofddorp (NL)
(74) Representative: Chimini, Francesco

(57) **Abstract**

A monitor assembly comprises a front cover lens (10), at least one mounting bracket (12) mounted on the rear side of the cover lens, a LCD panel (14), a PCB bracket (16) placed on the LCD panel (14) and fastened to the mounting brackets, a monitor frame (18) fastened to the at least one mounting bracket (12). At least a sealing gasket (20, 22) is removably clipped on the perimetral frame (10b).

## Description

The present invention relates to a monitor assembly, in particular based on touchscreen technology, and to a method for assembling the monitor assembly.

Displays, touchscreens and the like are increasingly used also in industrial applications.

In many industrial applications there is a corresponding increase in the demand for mechanical robustness and resistance to external influences and conditions.

In particular, there are demands on seal tightness and resistance to corrosion, especially because in an industrial environment there is often splashing or spraying of corrosive agent or water, against which the display must be sealed and protected. Also, cleaning of machinery or equipment creates the risk of exposure to splashed or sprayed cleaning agent or water, against which the display should be sealed and protected.

An example of a display structure having characteristics of robustness and seal tightness is disclosed in US9888588B2.

Currently, changing the IP rating, for instance from IP63 to IP69, and/or changing the corrosion or contamination resistance of a monitor, typically necessitates remanufacturing the monitor or placing an order for a new one. However, there is an increasing need for a user or a customer to modify the properties of a monitor after manufacturing, without the need of remanufacturing.

Therefore, it would be desirable to enable customers to adjust the monitor's properties to align with their specific industry requirements.

Furthermore, in case the seal tightness of the monitor is deteriorated, it would be desirable to enable customers to restore such monitor's property by replacing only the damaged or corroded components instead of replacing the whole monitor.

One object of the present invention is to provide a monitor assembly which can satisfy such needs.

Another object of the invention is to provide a monitor assembly that, in meeting the aforementioned demands in industrial contexts, especially the sealing demands, is particularly inexpensive and easy to manufacture and assemble.

Still another object of the invention is to provide a monitor assembly which is more sustainable and cost effective in terms of maintenance for customers.

These objects are achieved with a monitor assembly according to claim 1 and with a method for assembling the monitor assembly according to claim 14. The dependent claims describe preferred embodiments of the invention.

The features and advantages of the monitor assembly and of the assembling method according to the invention will be apparent from the description given below of preferred embodiments thereof, made by way of a nonlimiting examples with reference to the appended drawings, wherein:

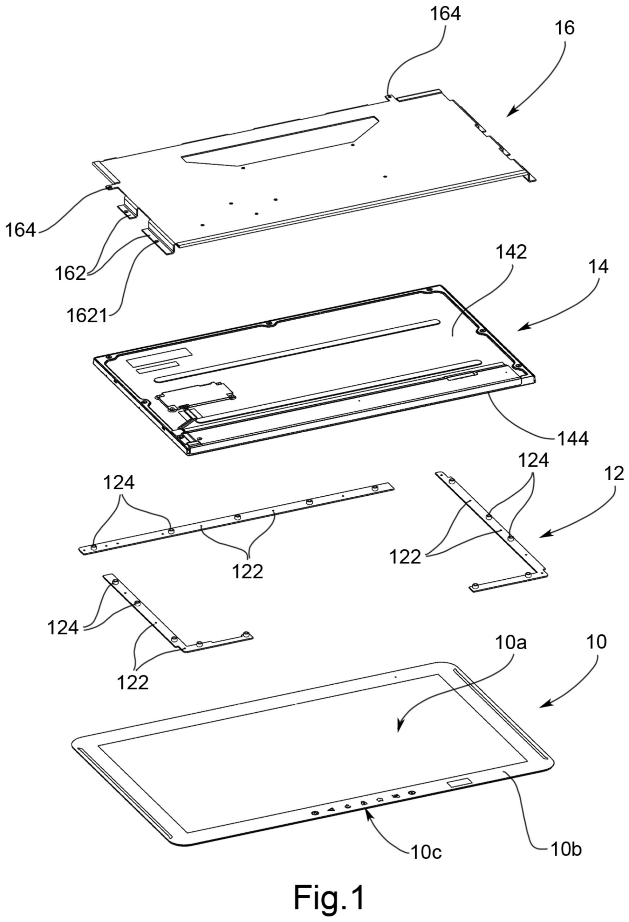

- Figure 1 is an exploded view of a sub-assembly of the monitor assembly according to the invention;

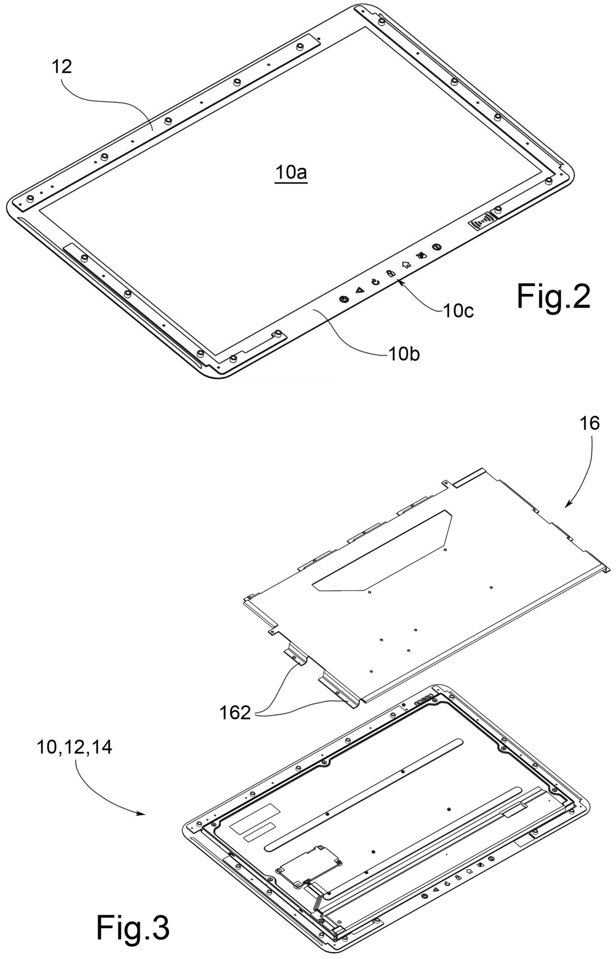

- Figure 2 is a perspective view of the cover lens provided with brackets;
- Figure 3 is a perspective view of the sub-assembly of figure 1 partially assembled;

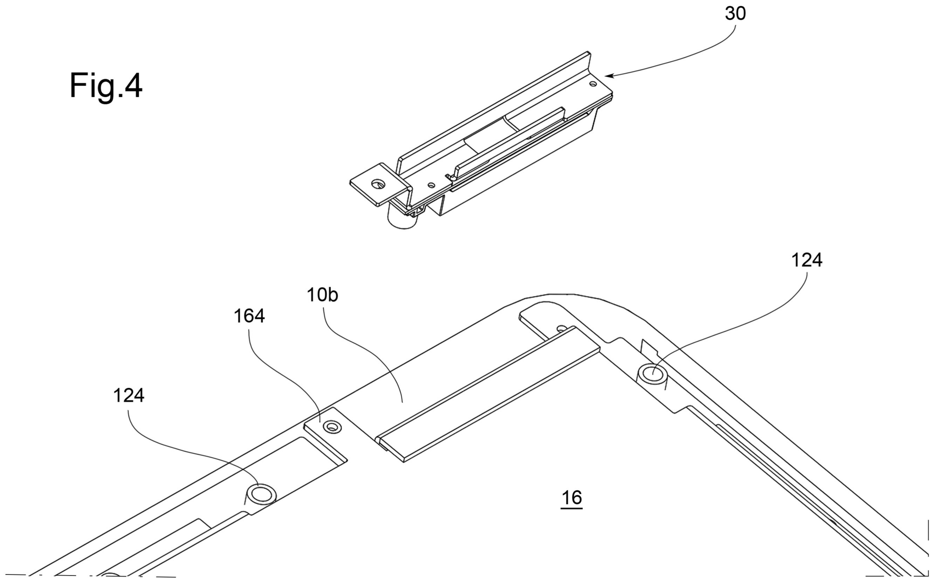

- Figure 4 is a perspective exploded view of an enlarged corner portion of the assembled sub-assembly of figure 3 and of a back-lighting device to be mounted thereon;

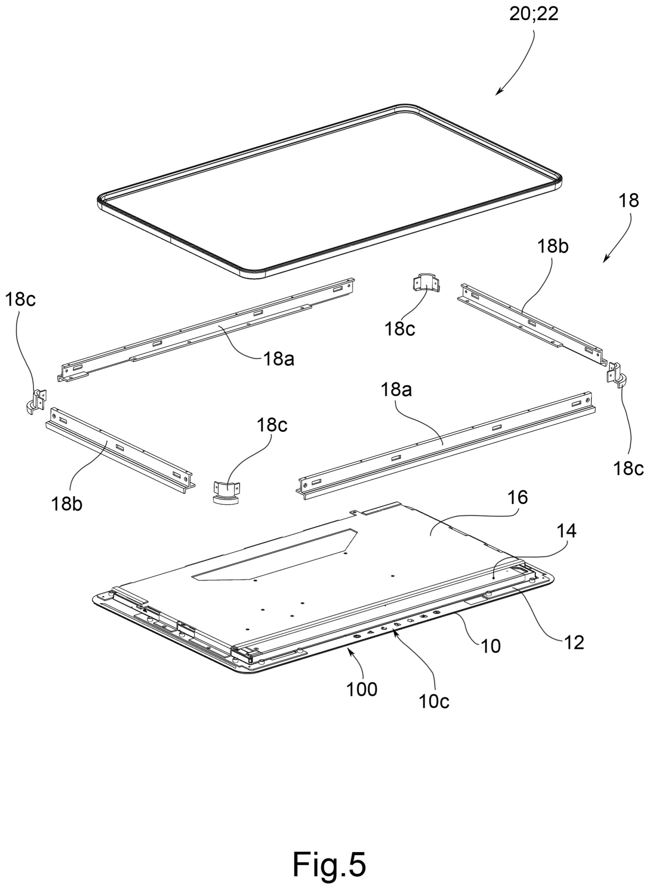

- Figure 5 is a perspective exploded view of the assembled sub-assembly of figure 3, of a monitor frame and a sealing gasket;

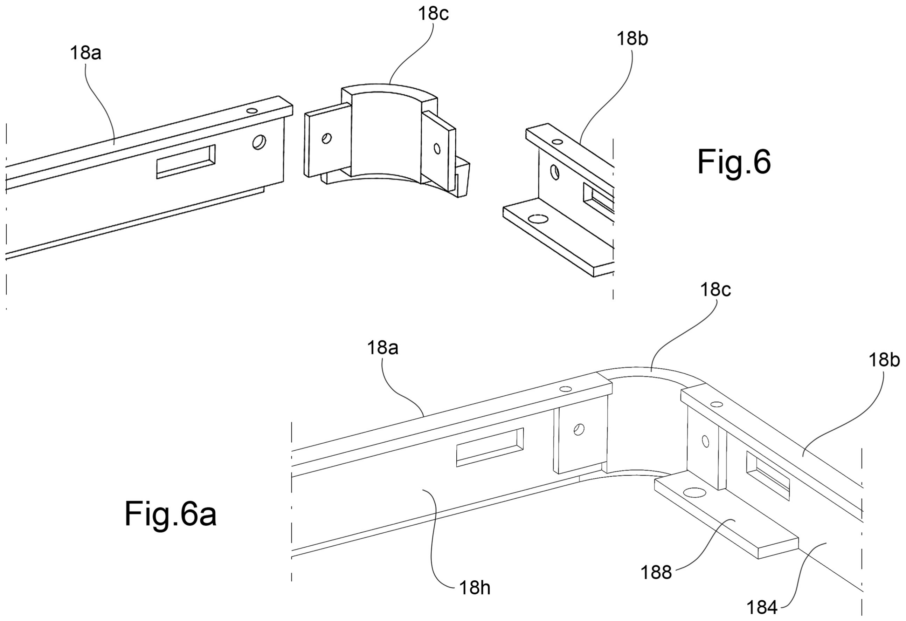

- Figures 6 and 6a are perspective views of an enlarged corner portion of the monitor frame, before and after being assembled, respectively;

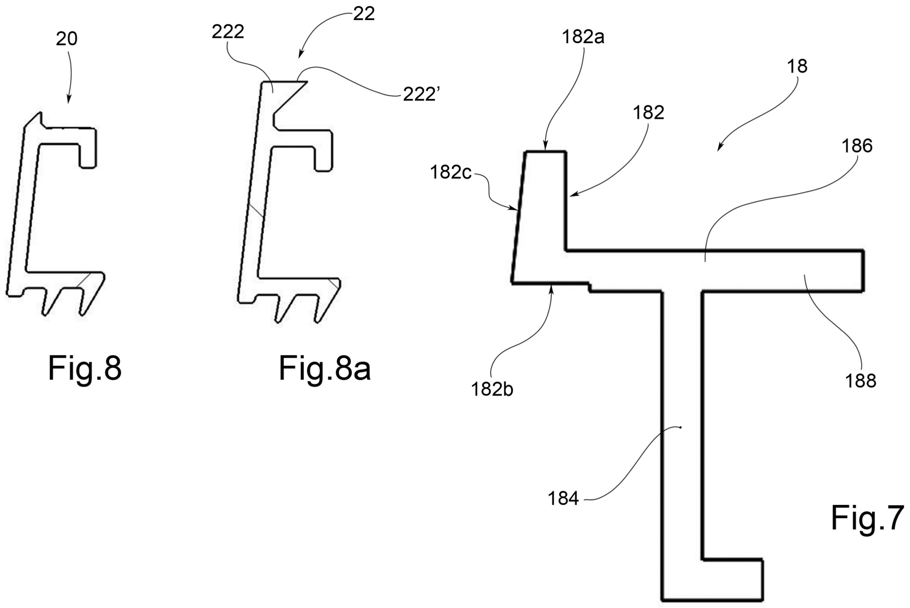

- Figure 7 is a cross section of the monitor frame;
- Figures 8 and 8a are cross sections of two interchangeable sealing gaskets to be mounted on the monitor frame;

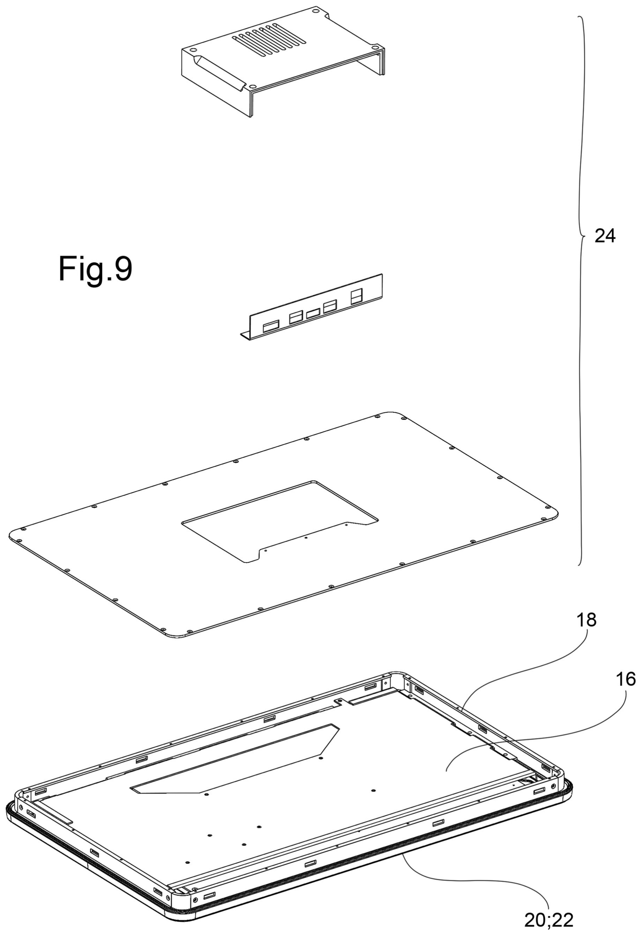

- Figure 9 is a perspective exploded view of the monitor assembly;
- Figures 10 and 10a are cross sections of two embodiments of the assembled monitor assembly; and

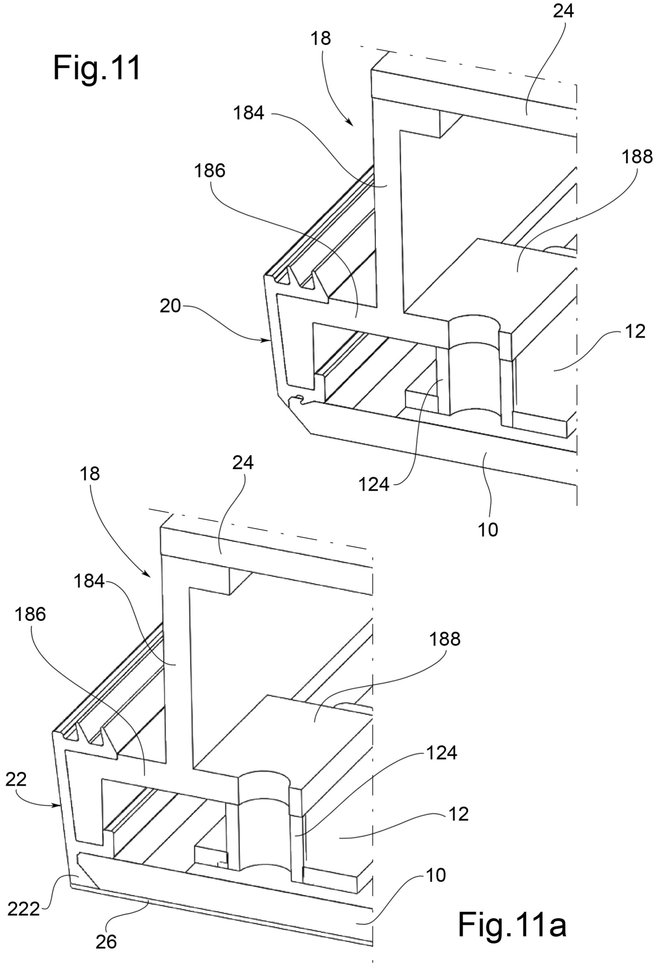

- Figures 11 and 11a are enlarged views of cross sections of the two embodiments of the monitor assembly of Figures 10, 10a respectively.

In the drawings, reference number 1 globally denotes a monitor assembly, in particular for industrial applications.

In one embodiment, the monitor assembly 10 is adapted to realize a touch screen monitor.

The monitor assembly 1 comprises a front cover lens 10 having an inner main portion 10a and a perimetral frame 10b around the inner main portion 10a.

For example, the front cover lens 10 has a rectangular shape.

In one embodiment, touch buttons electronics may be attached on the perimetral frame 10b and buttons icons 10c may be laser engraved.

At least one mounting bracket 12 is mounted on the rear side of the perimetral frame 10b. In the example shown in the drawings, two L-shaped and one rectilinear brackets 12 are mounted in the rear side of the perimetral frame 10b.

An LCD panel 14 is mounted on the inner main portion 10a of the cover lens 10.

A PCB bracket 16 is placed on the LCD panel 14. The PCB bracket 16 is fastened to the at least one mounting bracket 12.

A monitor frame 18 is also fastened to the at least one mounting bracket 12.

The monitor frame 18 forms an outer rib 182 facing the rear side of an outer edge of the perimetral frame 10b.

At least a sealing gasket 20; 22 is removably clipped on the outer rib 182 so as to sealingly engage the outer edge of the perimetral frame 10b.

A back cover 24 is installed on the monitor frame 18.

Such a monitor assembly 1 is therefore formed by a plurality of components which can be easily assembled and disassembled for changing the IP rating of the monitor, for instance from IP63 to IP69, and/or changing its corrosion or contamination resistance, according to the needs. In particular, this is obtained by allowing the sealing gasket 20; 22 to be easily installed on and removed from the monitor frame 18.

The monitor assembly 1, therefore, may be provided with at least two interchangeable sealing gaskets 20; 22. In particular, a second sealing gasket 22 is suitable for replacing a first sealing gasket 20 on the outer rib 182. The at least two sealing gaskets 20; 22 have different design and/or material so as to allow the monitor assembly to have different IP ratings and/or different contamination or corrosion resistance depending on which sealing gasket between the at least two sealing gaskets 20; 22 is mounted on the monitor frame 18.

In other words, the outer rib 182 is arranged to be able to accept, alternatively, different sealing gaskets 20; 22 having different design and/or material.

The expression "contamination or corrosion resistance" may include, for example, any configuration of the monitor assembly which complies with the standards of the food/pharma industry. For example, the monitor assembly 1 provided with the perimetral frame 18 and a suitable sealing gasket 20; 22 installed thereon can used even in severe environments without the need of glass or plastic cover in the front. The monitor assembly can therefore be made of steel in the exposed parts, which can resist cleaning agents and/or water pressure.

In one embodiment, at least one of the sealing gaskets 20; 22 forms a front outer lip 222 covering the lateral surface of the cover lens 10. The outer lip 222 of the sealing gasket 22 ends with a front flat lip surface 222', which is co-planar to the front surface of the cover lens 10.

In such an embodiment, the monitor assembly 1 may include a protective foil 26 placed on the front surface of the cover lens 10 and extending so as to overlap the front flat lip surface 222' of sealing gasket 22.

Going back to the monitor frame 18, in one embodiment the monitor frame 18 is made by four sides 18a, 18b and four connecting corners 18c. Each connecting corner 18c connects two adjacent sides 18a, 18b.

Advantageously, the four sides 18a, 18b and the connecting corners 18c may be configured to be connected by a snap or friction coupling.

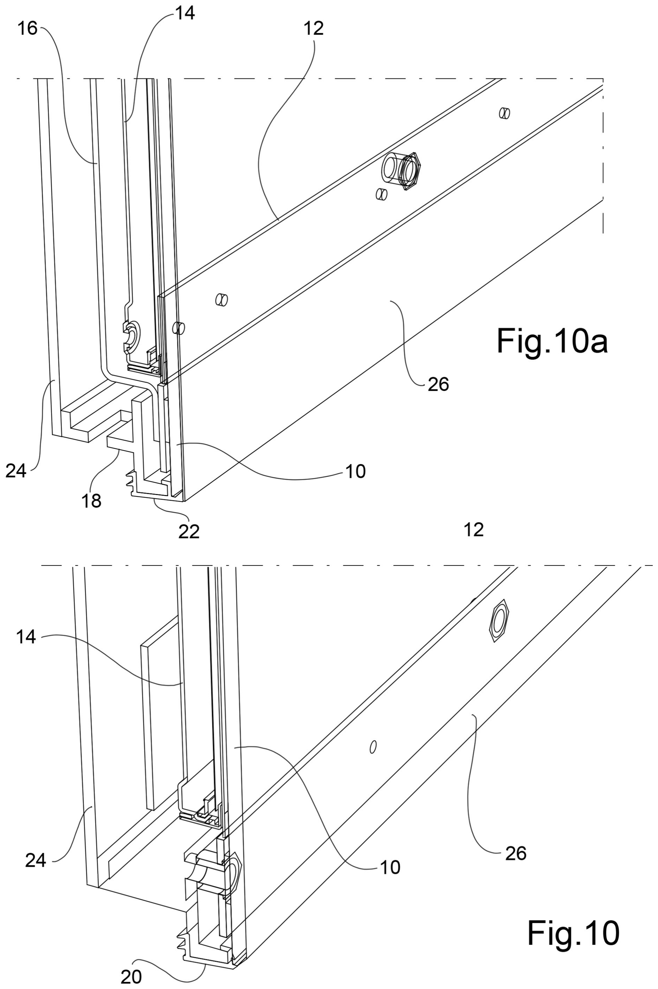

In one embodiment, each sealing gasket 20; 22 has a "C" shape so as to cover a front end 182a, a rear end 182b and an outer lateral surface 182c of the outer rib 182 (see figures 10 and 10a).

In one embodiment, the monitor frame 18 is formed by an extruded profile bar. The extruded profile bar is cut so as to obtain the four sides 18a, 18b, according to size of the monitor.

In one embodiment, the extruded profile bar comprises a front-to-rear wall 184 and a front transversal wall 186. When the monitor frame 18 is fastened to the mounting brackets 12, the front-to-rear wall 184 extends in a direction going from the front to the rear of the monitor assembly, that is, substantially orthogonally to the front cover lens 10. The transversal wall 186 is substantially parallel to the front cover lens 10 and extends from a front end of the front-to-rear wall 184. The outer rib 182 extending from an outer end of the front transversal wall 186.

In one embodiment, the front transversal wall 186 forms, at least along some longitudinal sections of the extruded profile bar, an inner wing 188 for the attachment, for example by means of screws, of the monitor frame 18 to the mounting brackets 12.

In one embodiment, threaded holes 122 are formed in the at least one mounting bracket 12. The PCB bracket 16 has lateral wings 162 in which fastening holes 162' are formed. The lateral wings 162 of the PCB brackets 16 are fastened to threaded holes 122 by means of screws or clippers.

Furthermore, in one embodiment, in the at least one mounting bracket 12 threaded bushings 124 are formed. The monitor frame 18 is fastened to the at least one mounting bracket 12 by means of screws engaging the threaded bushings 124.

In one embodiment, the monitor assembly 1 further comprises one or more back lighting devices 30 for the back light of respective portions of the cover lens 10. The back lighting devices 30 are removably fastened to a peripheral edge of the PCB bracket 16.

In more detail, the peripheral edge of the PCB bracket 16 comprises at least two fastening tabs 164. Each fastening tab 164 is suitable for supporting a back lighting device 30. The at least two fastening tabs 164 may be provided on orthogonal sides of the peripheral edge of the PCB bracket 16. Therefore, the same back lighting device 30 can be mounted on the PCB bracket 16 according to the orientation of the monitor assembly in use, that is, in a panoramic or portrait orientation.

In one embodiment, the LCD panel 14 comprises a display 142 and a touch sensor 144 coupled to the display 142.

An object of the present invention is also a method for assembling the monitor assembly 1.

In a first step, a monitor sub-assembly 100 is preassembled. The sub-assembly 100 comprises the front cover lens 10 with the at least one mounting brackets 12, the LCD panel 14 and the PCB bracket 16.

Then, one sealing gasket 20; 22 is mounted on the monitor frame 18.

The monitor frame 18 provided with the sealing gasket 20; 22 is mounted on the sub-assembly 100.

Then, the back cover 24 can be installed on the monitor frame 18.

In one embodiment, the monitor frame 18 is obtained by cutting four pieces 18a, 18b from an extruded profile bar, depending on the LCD panel size and by connecting the four pieces by means of the four connecting corners 18c.

In one embodiment, each sealing gasket 20; 22 can be also obtained by cutting an extruded sealing gasket bar, depending on the LCD panel size.

Therefore, the monitor assembly 1 is assembled in a very efficient way. Moreover, the assembling steps are the same irrespective of the size of the monitor, the IP rating of the monitor and the orientation in use. In particular, the monitor assembly has a flexible and modular design. For example, monitor of different sizes and orientation can be manufactured starting from the same components.

The interchangeable sealing gasket also enables customers to just change the gasket in case heavily damaged or corroded. Therefore, in such a case, there is no need to change the whole monitor.

The monitor assembly according to the invention, therefore, also meets the needs of greater sustainability and reduction of maintenance costs for customers.

A person skilled in the art may make modifications and adaptations to the embodiments of the monitor assembly and assembling method according to the invention, replacing elements with others functionally equivalent so as to satisfy contingent requirements while remaining within the scope of protection of the following claims.

Each of the characteristics described as belonging to a possible embodiment may be realized independently of the other embodiments described.

## Claims

1. Monitor assembly, comprising:
- a front cover lens (10) having an inner main portion (10a) and a perimetral frame (10b) around the inner main portion;
- at least one mounting bracket (12) mounted on the rear side of the perimetral frame (10b);
- a LCD panel (14) mounted on the inner main portion (10a) of the cover lens (10);
- a PCB bracket (16) placed on the LCD panel (14) and fastened to the mounting brackets;
- a monitor frame (18) fastened to the at least one mounting bracket (12), the monitor frame (18) forming an outer rib (182) facing the rear side of an outer edge of the perimetral frame (10b);
- at least a sealing gasket (20, 22) removably clipped on the outer rib (182) so as to sealingly engage said outer edge of the perimetral frame (10b);
- a back cover (24) installed on the monitor frame (18).

2. Monitor assembly according to claim 1, wherein the outer rib (182) is arranged to be able to accept, alternatively, at least two different sealing gaskets (20; 22) having different design and/or material so as to allow the monitor assembly to have different IP ratings and/or different contamination resistance depending on which sealing gasket between the at least two sealing gaskets (20; 22) is mounted on the monitor frame (18).

3. Monitor assembly according to claim 1 or 2, wherein at least one of the sealing gaskets (20; 22) forms a front outer lip (222) covering the lateral surface of the cover lens (10).

4. Monitor assembly according to claim 3, further comprising a protective foil (26) placed on the front surface of the cover lens (10), the outer lip (222) of the sealing gasket (22) ending with a front flat lip surface (222'), the front flat lip surface (222') being co-planar to the front surface of the cover lens (10), the protective foil (26) extending so as to overlap said front flat lip surface (222').

5. Monitor assembly according to any of the previous claims, wherein the monitor frame (18) is made by four sides (18a, 18b) and four connecting corners (18c), each connecting corner (18c) connecting two adjacent sides (18a, 18b).

6. Monitor assembly according to any of the previous claims, wherein each sealing gasket (20; 22) has a "C" shape so as to cover a front end (182a), a rear end (182b) and an outer lateral surface (182c) of the outer rib (182).

7. Monitor assembly according to any of the previous claims, wherein the monitor frame (18) is formed by an extruded profiled bar, the extruded profiled bar comprising a front-to-rear wall (184) and a front transversal wall (186), wherein the front-to-rear wall is substantially orthogonal to the front cover lens (10) and wherein the transversal wall is substantially parallel to the front cover lens (10) and extends from a front end of the front-to-rear wall (184), the outer rib (182) extending from an outer end of the front transversal wall (186).

8. Monitor assembly according to claim 7, wherein the front transversal wall (186) forms, at least along some longitudinal sections of the extruded profiled bar, an inner wing (188) for the attachment, for examples by means of screws, of the monitor frame (18) to the mounting brackets (12).

9. Monitor assembly according to any of the previous claims, wherein in the mounting brackets (12) threaded holes (122) are formed, and wherein the PCB bracket (16) has lateral wings (162) in which fastening holes (162') are formed, the lateral wings (162) being fastened to threaded holes (122) of the mounting brackets (12) by means of screws or clippers.

10. Monitor assembly according to any of the previous claims, wherein in the mounting brackets (12) threaded bushings (124) are formed, and wherein the monitor frame (18) is fastened to the mounting brackets (12) by means of screws engaging said threaded bushings (124).

11. Monitor assembly according to any of the previous claims, further comprising one or more back lighting devices (30) for the back light of respective portions of the cover lens (10), the back lighting devices (30) being removably fastened to a peripheral edge of the PCB bracket (16).

12. Monitor assembly according to claim 11, wherein the peripheral edge of the PCB bracket (16) comprises at least two fastening tabs (164), each fastening tab (164) being suitable for supporting a back lighting device (30), the at least two fastening tabs (164) being provided on orthogonal sides of the peripheral edge of the PCB bracket (16).

13. Monitor assembly according to any of the previous claims, wherein the LCD panel (14) comprises a display (142) and a touch sensor (144) coupled to the display (142).

14. Method for assembling a monitor assembly according to any of the previous claims, comprising the steps of:
- pre-assembling a monitor sub-assembly (100) comprising the front cover lens (10) with mounting brackets (12), the LCD panel (14) and the PCB bracket (16);
- mounting one sealing gasket (20; 22) on the monitor frame (18);
- connecting the monitor frame (18) provided with the sealing gasket (20; 22) to the sub-assembly (100);
- installing the back cover (24) on the monitor frame (18).

15. Method according to claim 14, wherein the monitor frame (18) is obtained by cutting four pieces (18a, 18b) from an extruded profiled bar depending on the LCD panel size and by connecting the four pieces by means of four connecting corners (18c).

16. Method according to claim 14 or 15, wherein each sealing gasket (20; 22) is obtained by cutting an extruded sealing gasket bar depending on the LCD panel size.
